Europäisches Patentamt

European Patent Office

Office européen des brevets

(11) Veröffentlichungsnummer: **0 266 588 B1**

# (12) EUROPÄISCHE PATENTSCHRIFT

(45) Veröffentlichungstag der Patentschrift: **29.05.91**

(51) Int. Cl.⁵: **H04L 7/02**

(21) Anmeldenummer: **87114958.9**

(22) Anmeldetag: **13.10.87**

(54) **Phasenregelkreis.**

(30) Priorität: **20.10.86 DE 3635641**

(43) Veröffentlichungstag der Anmeldung:
**11.05.88 Patentblatt 88/19**

(45) Bekanntmachung des Hinweises auf die
Patenterteilung:
**29.05.91 Patentblatt 91/22**

(84) Benannte Vertragsstaaten:
**AT BE CH DE ES FR GB GR IT LI NL SE**

(56) Entgegenhaltungen:
**DE-A- 2 925 391**
**US-A- 3 731 219**
**US-A- 4 066 978**

(73) Patentinhaber: **Siemens Aktiengesellschaft**
**Wittelsbacherplatz 2**
**W-8000 München 2(DE)**

(72) Erfinder: **Sonntag, Fritz, Dipl.-Ing.**
**Schwetzingerstrasse 12**
**W-8000 München 60(DE)**
Erfinder: **Lang, Hermann, Dipl.-Ing.**
**Pendlweg 5**
**W-8120 Weilheim(DE)**

## Beschreibung

Die Erfindung bezieht sich auf einen Phasenregelkreis mit einem Phasendiskriminator, mit einem ersten Frequenzteiler, dessen Eingang als Eingang für einen Lückentakt dient und dessen Ausgang mit dem ersten Eingang des Phasendiskriminators verbunden ist, mit einem Regler- und Oszillatorteil, dessen Eingang an den Ausgang des Phasendiskriminators angeschlossen ist und dessen Ausgang der Abgabe eines geregelten Taktes dient, und mit einem zweiten Frequenzteiler, dessen Eingang mit dem Ausgang des Regler- und Oszillatorteils und dessen Ausgang mit einem zweiten Eingang des Phasendiskriminators verbunden ist.

Ein derartiger Phasenregelkreis (phase-locked-loop) ist aus dem Buch "Halbleiter-Schaltungstechnik", Tietze/ Schenk, 6. Auflage, Springer-Verlag Berlin Heidelberg New York Tokyo, 1983, Seiten 828 und 829 bekannt. Er arbeitet als Frequenzvervielfacher und benötigt dazu Frequenzteiler unterschiedlichen Teilungsfaktors.

Aus der US-Patentschrift 4 066 978 ist ein Phasenregelkreis bekannt, der im Regler- und Oszillatorteil einen K-Zähler mit Aufwärts- und Abwärtszähler, eine Inkrement/Dekrement-Schaltung sowie einen einfachen Zähler enthält, verschiedene Taktfrequenzen für den K-Zähler und die Inkrement/Dekrement-Schaltung benötigt, wegen monostabiler Kippstufen nicht integrierbar ist und keinen Takt aus einem Lückentakt rückgewinnen kann.

In der Zeitschrift "telcom report", 9 (1986) Heft 3, Seiten 190 - 197 sind weiter Digitalsignal-Multiplexgeräte beschrieben. In diesen wird in dem im Empfangsweg liegenden Demultiplexer zur Rückgewinnung des jeweiligen Unterkanals dessen Takt benötigt. Die Taktrückgewinnung erfolgt üblicherweise mit einem Phasenregelkreis PLL im Zusammenwirken mit einem Pufferspeicher. Hierbei wird der gedemultiplexte Unterkanal mit dessen Lückentakt in den Pufferspeicher eingelesen und mit dem aus diesem Lückentakt mit Hilfe eines Phasenregelkreises hoher Güte gewonnenen jitterarmen Takt ausgelesen. Phasenregelkreise hoher Güte sind wegen der Anforderung an die Jitterdämpfung notwendig.

Der Regler- und Oszillatorteil enthält meist einen analogen Integrator, um möglichst kleine Phasenabweichungen zu erzielen. Wegen der beim Integrator vorhandenen unteren Grenzfrequenz kann es aber zu einer unerwünschten Jitterüberhöhung kommen.

In einem Digitalsignal-Multiplexgerät DSMX 2/34 sind für die Rückgewinnung der Takte aus sechzehn 2-Mbit/s-Kanälen ebensoviele Phasenregelkreise notwendig.

Aufgabe der Erfindung ist es, einen wenig aufwendigen und integrierbaren Phasenregelkreis anzugeben, der nur eine Taktfrequenz benötigt, die auch mehrere Phasenregelkreise in einer gemeinsamen integrierten Schaltung ohne Quarzoszillator versorgen kann. Mit diesen soll der Platz- und Kostenaufwand beispielsweise in einem Digitalsignal-Multiplexgerät oder - Verteilermuliplexer gesenkt werden.

Ausgehend von einem Phasenregelkreis der einleitend geschilderten Art wird diese Aufgabe erfindungsgemäß dadurch gelöst, daß im Regler- und Oszillatorteil ein Summierzähler für Mittelwertbildung, dessen Steuereingang mit dem Ausgang des Phasendiskriminators verbunden ist, ein Quarzoszillator, ein Exklusiv-ODERGatter, dessen erster Eingang mit dem Ausgang des Summierzählers und dessen zweiter Eingang mit dem Ausgang des Quarzoszillators und dem Takteingang des Summierzählers verbunden sind, und ein dritter Frequenzteiler vorgesehen sind, dessen Eingang mit dem Ausgang des Exklusiv-ODER-Gatters verbunden ist und dessen Ausgang den Ausgang des Regler- und Oszillatorteils bildet, und daß ferner die Hilfsfrequenz des Quarzoszillators niedriger als die Frequenz des geregelten Taktes multipliziert mit dem Teilungsfaktor des dritten Frequenzteilers gewählt ist.

Vorteilhaft ist es dabei, wenn der Ausgang des Quarzozillators mit den zweiten Eingängen der Exklusiv-ODER-Gatter mehreror Phasenregelkreise ohne eigenen Quarzoszillator verbunden ist.

Damit läßt sich eine Vollintegration vieler Phasenregelkreise lediglich mit einem gemeinsamen äußeren Quarzoszillator realisieren. Bezüglich eines vorgegebenen Eigenjitters und einer nicht zulässigen Jitterüberhöhung im Jitterdämpfungsverhalten kann der dazu notwendige Schaltungsaufwand klein und der Leistungsverbrauch niedrig gehalten werden.

Zur Regelung eines Lückentaktes einer mittleren Frequenz von 2,048 MHz ist es vorteilhaft, wenn für alle Frequenzteiler ein Teilungsfaktor 16 gewählt ist, wenn der Summierzähler bis 2048 zählt und wenn der Quarzoszillator eine Frequenz von 32,76 MHz abgibt.

Damit ist eine vierfache Verwendung mit einem gemeinsamem Quarzoszillator in einem Digitalsignal-Multiplexgerät DSMX 2/8, eine sechzehnfache Verwendung mit einem gemeinsamem Quarzoszillator in einem Digitalsignal-Multiplexgerät DSMX 2/34 und eine mehrfache Verwendung bei anderen Digitalsignal-Multiplexern, oder - Verteilermultiplexern möglich.

Anhand von Ausführungsbeispielen wird die Erfindung nachstehend näher erläutert.

Fig. 1     zeigt einen Phasenregelkreis nach dem Stand der Technik,

Fig. 2    zeigt einen erfindungsgemäßen Regler- und Oszillatorteil für einen Phasenregelkreis nach Figur 1,

Fig. 3    zeigt einen Pulsplan zur Erläuterung der Wirkungsweise des Phasenregelkreises nach den Fig. 1 und 2 und

Fig. 4    zeigt ein praktisches Ausführungsbeispiel der Erfindung.

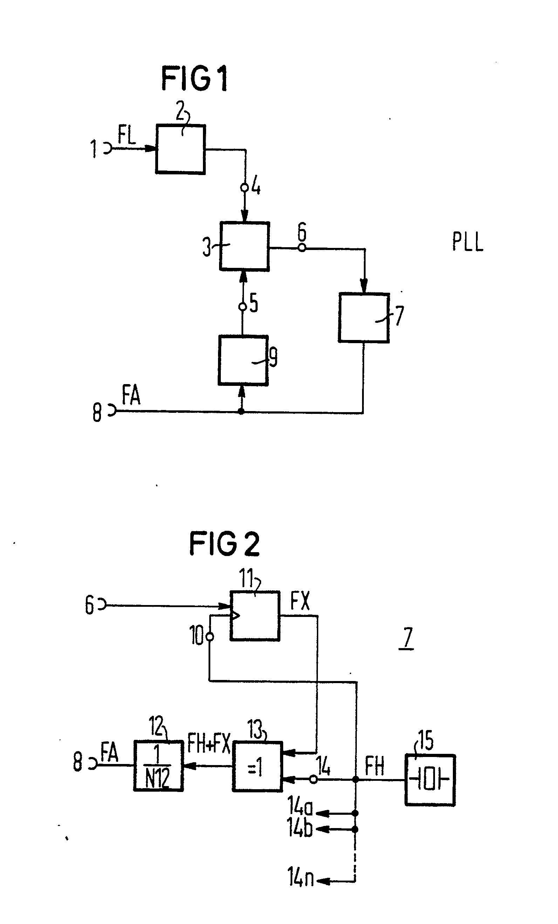

Fig. 1 zeigt einen Phasenregelkreis PLL nach dem Stand der Technik mit einem Eingang 1 für einen Lückentakt mit der Frequenz FL, einen Frequenzteiler 2, einen Phasendiskriminator 3 mit Eingängen 4 und 5 und einem Ausgang 6, einen Regler- und Oszillatorteil 7, einen Ausgang 8 für den mittels des Phasenregelkreises PLL geregelten Takt und einen Frequenzteiler 9.

Fig. 2 zeigt den Regler- und Oszillatorteil 7 detailliert. Dieser enthält einen Summierzähler 11 zur Mittelwertbildung, einen Frequenzteiler 12, ein Exklusiv-ODER-Gatter 13 und einen Quarzoszillator 15.

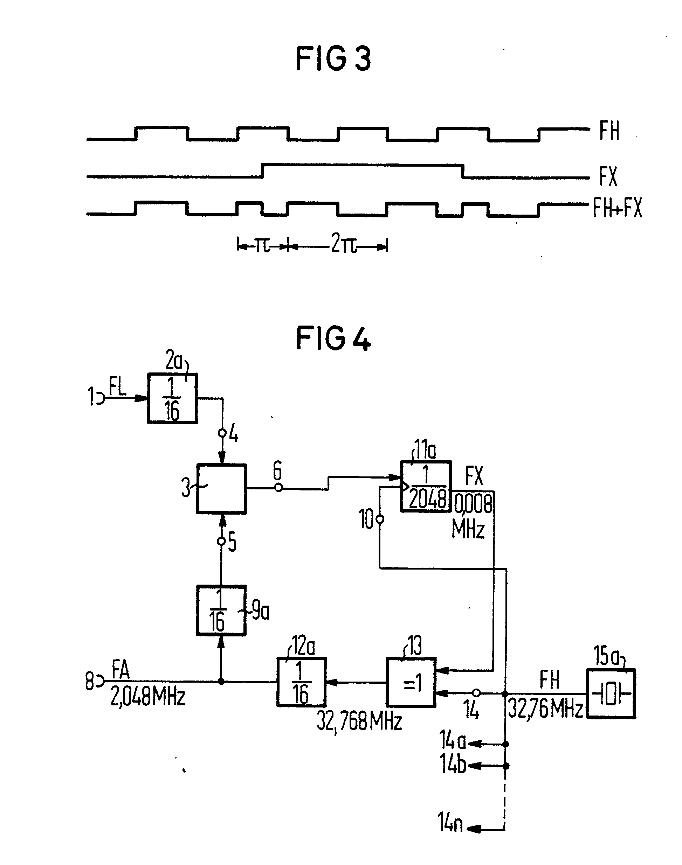

Figur 3 zeigt einen Pulsplan mit der Hilfsfrequenz FH des Ausgangssignals des Quarzoszillators 15, mit der Frequenz FX des Ausgangssignals des Summierzählers 11 und der Summe der Frequenzen FH + FX beider Signale am Ausgang des Exklusiv-ODER-Gatters 13.

Die Wirkungsweise des Phasenregelkreises nach den Figuren 1 und 2 ist wie folgt: Ein am Eingang 1 angelegter Lückentakt mit der Frequenz FL wird durch den Frequenzteiler 2 in Form eines Zählers derart geteilt, daß am Eingang 4 des Phasendiskriminators 3 eine Rechteckspannung mit lediglich noch schwankender Periodendauer anliegt. Mit dem Teilungsfaktor des Frequenzteilers 2 muß dabei ein sich beispielsweise aus drei hintereinander liegenden Lücken ergebender maximal möglicher Jitter berücksichtigt werden. Der als flankengetriggertes RS-Flipflop ausgebildete Phasendiskriminator 3 vergleicht diese Rechteckspannung mit der am Eingang 5 des Phasendiskriminators 3 anliegenden durch Teilung im Frequenzteiler 9 aus dem Takt mit der Frequenz FA abgeleiteten hinsichtlich der Phasendifferenz. Der Frequenzteiler 9 weist dafür einen gleichen Aufbau wie der Frequenzteiler 2 auf.

Zur Erzeugung des Taktes mit der Frequenz FA liefert zuerst der Quarzoszillator 15 eine Rechteckspannung mit der Hilfsfrequenz FH, die kleiner als die Frequenz FA des Taktes multipliziert mit dem Teilungsfaktor $N_{12}$ des Frequenzteilers 12 ist. Bei einer zulässigen Toleranz der Frequenz des Auslesetaktes von $\pm\ \Delta FA$ gilt $FH < N_{12}\ (FA - \Delta FA)$. Durch regelmäßiges Umpolen während einer Halbperiode der Hilfsfrequenz FH mit der Frequenz FX über das Exklusiv-ODER-Gatter 13 wird die mittlere Frequenz der Impulsreihe mit der Hilfsfrequenz FH auf den Wert FH + FX erhöht, wobei an den Umpolstellen jeweils ein Phasenfehler von $\pi$ auftritt. Dieser wird durch Teilen der Impulsfolge mit dem Frequenzteiler 12 auf den restlichen Phasenfehler (Eigenjitter)

$$\frac{\pi}{N_{12}} = \frac{1}{2N_{12}}$$

UI verringert, wobei 1 UI = 1 Unit Interval = $2\pi$ ist. Die Frequenz des Auslesetaktes ergibt sich damit zu

$$FA = \frac{1}{N_{12}}\ (FH + FX).$$

Das Ausgangssignal des Phasendiskriminators 3 steuert entsprechend seinem Tastverhältnis über einen Steuereingang, der den Takteingang freigibt, bzw. sperrt, den Summierzähler 11, dessen Frequenz FX gleich dem mittleren Frequenzunterschied von $FH/N_{12}$ zu FL ist, wobei $N_{12}$ der Teilungsfaktor des Frequenzteilers 12 ist. Die Hilfsfrequenz FH steuert das Exklusiv-ODER-Gatter 13 direkt an. Die Größe des Summierzählers 11 bestimmt den Frequenzziehbereich des Taktes mit der Frequenz FA und damit auch die Hilfsfrequenz FH.

Die Grenzfrequenz FG der Jitterübertragungsfunktion ergibt sich aus

$$FG = \frac{FA}{2\pi \cdot N_{11} \cdot N_2}\ ,$$

wobei die Indizes der Teilungsfaktoren auf die entsprechenden Frequenzteiler bzw. den Summierzähler hinweisen. Da es keine integrierende Wirkung in diesem Phasenregelkreis gibt, tritt auch keine Jitterüberhöhung auf.

An dem Ausgang des Quarzoszillators 15 können zusätzlich mehrere beispielsweise drei oder fünfzehn Phasenregelkreise ohne Quarzoszillator jeweils mit dem zweiten Eingang 14a, 14b ... 14n des jeweiligen Exklusiv-ODER-Gatters 13 angeschlossen werden.

Figur 4 zeigt ein praktisches Ausführungsbeispiel des erfindungsgemäßen Phasenregelkreises. Die Frequenzteiler 2a, 9a und 12a haben jeweils einen Teilungsfaktor TF-16- der Summierzähler 11a zählt bis 2048, ehe er ein Ausgangssignal abgibt. Der Quarzoszillator 15a gibt eine Hilfsfrequenz FH = 32,76 MHz ab, der Summierzähler 11a liefert im Mittel eine Frequenz FX = 0,008 MHz. Am Ausgang des Exklusiv-ODER-Gatters 13 tritt eine Frequenz FH + FX = 32,768MHz mit 0,5

UI Jitter auf. Am Ausgang 8 wird ein Takt FA = 2,048 MHz mit einem im Frequenzteiler 12a um den Faktor sechzehn reduzierten Jitter (0,032 UI) ausgegeben.

## Ansprüche

1. Phasenregelkreis (PLL) mit einem Phasendiskriminator (3), mit einem ersten Frequenzteiler (2), dessen Eingang (1) als Eingang für einen Lückentakt dient und dessen Ausgang mit einem ersten Eingang (4) des Phasendiskriminators (3) verbunden ist, mit einem Regler- und Oszillatorteil (7), dessen Eingang an den Ausgang (6) des Phasendiskriminators (3) angeschlossen ist und dessen Ausgang (8) der Abgabe eines geregelten Taktes dient, und mit einem zweiten Frequenzteiler (9), dessen Eingang mit dem Ausgang (8) des Regler- und Oszillatorteils (7) und dessen Ausgang mit einem zweiten Eingang (5) des Phasendiskriminators (3) verbunden ist, **dadurch gekennzeichnet,** daß der erste (2) und der zweite (9) Frequenzteiler mit gleichen Teilungsfaktoren ausgebildet sind, daß im Regler-und Oszillatorteil (7) ein Summierzähler für Mittelwertbildung (11), dessen Steuereingang mit dem Ausgang (6) des Phasendiskriminators (3) verbunden ist, ein Quarzoszillator (15), ein Exklusiv-ODER-Gatter (13), dessen erster Eingang mit dem Ausgang des Summierzählers (11) und dessen zweiter Eingang (14) mit dem Ausgang des Quarzoszillators (15) und dem Takteingang des Summierzählers (11) verbunden sind, und ein dritter Frequenzteiler (12) vorgesehen sind, dessen Eingang mit dem Ausgang des Exklusiv-ODER-Gatters (13) verbunden ist und dessen Ausgang den Ausgang (8) des Reglerund Oszillatorteils (7) bildet, und daß ferner die Hilfsfrequenz (FH) des Quarzoszillators (15) niedriger als die Frequenz (FA) des geregelten Taktes multipliziert mit dem Teilungsfaktor des dritten Frequenzteilers (12) gewählt ist.

2. Phasenregelkreis nach Anspruch 1, **dadurch gekennzeichnet,** daß der Ausgang des Quarzoszillators (15) mit den zweiten Eingängen (14,14a,14b,14n) der Exklusiv-ODER-Gatter (13) mehrerer Phasenregelkreise ohne eigenen Quarzoszillator verbunden ist.

3. Phasenregelkreis nach Anspruch 1 oder 2 zur Regelung eines Lückentaktes einer mittleren Frequenz von 2,048 MHz, **dadurch gekennzeichnet,** daß für alle Frequenzteiler (2,9,12) ein Teilungsfaktor 16 gewählt ist, daß der Summierzähler (11) bis 2048 zählt und daß der Quarzoszillator (15) eine Hilfsfrequenz (FH) von 32,76 MHz abgibt.

4. Phasenregelkreis nach Anspruch 3, **gekennzeichnet durch** eine vierfache Verwendung mit einem gemeinsamen Quarzoszillator (15) in einem Digitalsignal-Multiplexgerät DSMX 2/8.

5. Phasenregelkreis nach Anspruch 3, **gekennzeichnet durch** eine sechszehnfache Verwendung mit einem gemeinsamen Quarzoszillator (15) in einem Digitalsignal-Multiplexgerät DSMX 2/34.

## Claims

1. Phase-locked loop (PLL) comprising a phase discriminator (3), a first frequency divider (2) whose input (1) serves as input for a slot clock signal and whose output is connected to a first input (4) of the phase discriminator (3), a regulating and oscillating component (7) whose input is connected to the output (6) of the phase discriminator (3) and whose output (8) serves to emit a regulated clock signal, and a second frequency divider (9) whose input is connected to the output (8) of the regulating and oscillating component (7) and whose output is connected to a second input (5) of the phase discriminator (3), characterised in that the first (2) and the second (9) frequency divider are designed with the same division factors, in that in the regulating and oscillating component (7) there are provided an adding counter for mean value formation (11) whose control input is connected to the output (6) of the phase discriminator (3), a crystal oscillator (15), an exclusive-OR gate (13) whose first input is connected to the output of the adding counter (11) and whose second input (14) is connected to the output of the crystal oscillator (15) and to the clock input of the adding counter (11), and a third frequency divider (12) whose input is connected to the output of the exclusive-OR gate (13) and whose output forms the output (8) of the regulating and oscillating component (7), and

in that, furthermore, the auxiliary frequency (FH) of the crystal oscillator (15) is selected to be lower than the frequency (FA) of the regulated clock signal multiplied by the division factor of the third frequency divider (12).

2. Phase-locked loop according to Claim 1, characterised in that the output of the crystal oscillator (15) is connected to the second inputs (14, 14a, 14b, 14n) of the exclusive-OR gate (13) of a plurality of phase-locked loops without their own crystal oscillator.

3. Phase-locked loop according to Claim 1 or 2 for regulating a slot clock signal having a middle frequency of 2.048 MHz, characterised in that a division factor of 16 is selected for all frequency dividers (2, 9, 12), in that the adding counter (11) counts up to 2048, and in that the crystal oscillator (15) emits an auxiliary frequency (FH) of 32.76 MHz.

4. Phase-locked loop according to Claim 3, characterised by a four-fold use of a common crystal oscillator (15) in a digital signal multiplex device DSMX 2/8.

5. Phase-locked loop according to Claim 3, characterised by a sixteen-fold use of a common crystal oscillator (15) in a digital signal multiplex device DSMX 2/34.

**Revendications**

1. Circuit de régulation de phase (PLL) comportant un discriminateur de phase (3), un premier diviseur de fréquence (2), dont l'entrée (1) est utilisée comme entrée pour une cadence d'intervalles vides et dont la sortie est raccordée à une première entrée (4) du discriminateur de phase (3), une partie formant régulateur et oscillateur (7), dont l'entrée est raccordée à une sortie (6) du discriminateur de phase (3) et dont la sortie (8) est utilisée pour délivrer une cadence réglée, et un second diviseur de fréquence (9), dont l'entrée est raccordée à la sortie (8) de la partie formant régulateur et oscillateur (7) et dont la sortie est raccordée à une seconde entrée (5) du discriminateur de phase (3), caractérisé par le fait que le premier diviseur de fréquence (2) et le second diviseur de fréquence (9) sont agencés de manière à posséder les mêmes facteurs de division, que dans la partie formant régulateur et oscillateur (7), il est prévu

un compteur additionneur utilisé pour la formation (11) de la valeur moyenne et dont l'entrée de commande est raccordée à la sortie (6) du discriminateur de phase (3), un oscillateur à quartz (15), une porte OU-Exclusif (13), dont la première entrée est raccordée à la sortie du compteur additionneur (11) et dont la seconde entrée (14) est raccordée à la sortie de l'oscillateur à quartz (15) et à l'entrée de cadence du compteur additionneur (11), et un troisième diviseur de fréquence (12), dont l'entrée est raccordée à la sortie de la porte OU-Exclusif (13) et dont la sortie forme la sortie (8) de la partie formant régulateur et oscillateur (7), et qu'en outre la fréquence auxiliaire (FH) de l'oscillateur à quartz (15) est choisie inférieure à la fréquence (FA) de la cadence réglée, multipliée par le facteur de division du troisième diviseur de fréquence (12).

2. Circuit de régulation de phase suivant la revendication 1, caractérisé par le fait que la sortie de l'oscillateur à quartz (15) est raccordée aux deux entrées (14, 14a, 14b, 14n) des portes OU-Exclusif (13) de plusieurs circuits de régulation de phase ne comportant pas un oscillateur à quartz particulier.

3. Circuit de régulation de phase suivant la revendication 1 ou 2 pour la régulation d'une cadence d'intervalles vides possédant une fréquence moyenne de 2,048 MHz, caractérisé par le fait que pour tous les diviseurs de référence (2,9,12), on choisit un facteur de division égal à 16, que le compteur additionneur (11) compte jusqu'à 2048, et que l'oscillateur à quartz (15) délivre une fréquence auxiliaire (FH) égale à 32,76 MHz.

4. Circuit de régulation de phase suivant la revendication 3, caractérisé par le fait qu'il est utilisé en quatre exemplaires avec un oscillateur à quartz (15) commun dans un appareil de multiplexage de signaux numériques DSMX 2/8.

5. Circuit de régulation de phase suivant la revendication 3, caractérisé par le fait qu'il est utilisé en six exemplaires avec un oscillateur à quartz commun (15) dans un appareil de multiplexage de signaux numériques DSMX 2/34.

# FIG 1

PLL

# FIG 2

# FIG 3

# FIG 4